**Europäisches Patentamt**

**European Patent Office**

**Office européen des brevets**

(19)

(11)  **EP 0 864 609 B1**

(12)  **EUROPÄISCHE PATENTSCHRIFT**

(45) Veröffentlichungstag und Bekanntmachung des Hinweises auf die Patenterteilung:
**17.10.2001  Patentblatt 2001/42**

(51) Int Cl.[7]: **C08L 33/06**, C09J 133/06

(21) Anmeldenummer: **98104293.0**

(22) Anmeldetag: **10.03.1998**

(54) **Verfahren zur Herstellung von Abdichtungen und Beschichtungen sowie zum Verkleben von Fliesen und Fussbodenbelägen**

Process for the preparation of seals and coatings and for fixing tiles and floor coverings

Procédé pour la préparation des garnitures d'étanchéité et des revêtements et pour coller des carreaux et des revêtements de sols

(84) Benannte Vertragsstaaten:
**DE FR GB IT**

(30) Priorität: **10.03.1997  DE 19709723**

(43) Veröffentlichungstag der Anmeldung:
**16.09.1998  Patentblatt 1998/38**

(73) Patentinhaber: **BASF AKTIENGESELLSCHAFT**
**67056 Ludwigshafen (DE)**

(72) Erfinder:
• **Krobb, Joachim**
**76829 Landau (DE)**
• **Fickeisen, Peter**
**67246 Dirmstein (DE)**
• **Däumer, Bernd**
**67098 Bad Dürkheim (DE)**

• **Barwich, Jürgen**
**67434 Neustadt (DE)**
• **Wistuba, Eckehardt**
**67098 Bad Dürkheim (DE)**

(74) Vertreter: **Kinzebach, Werner, Dr. et al**
**Patentanwälte,**
**Reitstötter, Kinzebach & Partner,**
**Ludwigsplatz 4**
**67059 Ludwigshafen (DE)**

(56) Entgegenhaltungen:
**EP-A- 0 395 990**  **WO-A-95/21884**
**DE-C- 4 324 357**  **US-A- 5 434 009**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft Verfahren zur Herstellung von Abdichtungen und Beschichtungen sowie zum Verkleben von Fliesen oder Fußbodenbelägen durch Auftragen von Massen auf der Basis von mindestens 20 Gew.-% Füllstoff enthaltenden wässrigen Dispersionen von Acrylestercopolymerisaten, die frei von größeren Mengen an flüchtigen organischen Lösungsmitteln, Weichmachern und niedermolekularen, ggf. modifizierten Naturharzen sind. Die Erfindung betrifft auch die Verwendung solcher Massen als Dichtstoffe, Beschichtungsmittel oder Einseitklebstoffe.

Mit der Entwicklung von neuartigen Polymerdispersionen auf Acrylatbasis wurde vor über 25 Jahren eine bedeutende Wende in der Verarbeitung von Dichtstoffen sowie in der Verlegearbeit von Fliesen und Fußbodenbelägen eingeleitet. Es konnten dem Verarbeiter Dichtstoffe, Beschichtungsmittel bzw. Einseitklebstoffe zur Verfügung gestellt werden, bei deren Verarbeitung die Gefahren gegenüber der Verarbeitung der bis dahin dominierenden Kautschuklösungen sehr stark vermindert wurden, da statt 75 % nur noch 5 % an brennbaren Lösungsmitteln freigesetzt wurden. Dichtstoffe sowie für Fliesen oder Fußbodenbeläge verwendete Einseitklebstoffe unterscheiden sich in ihrer Anwendung und den dafür erforderlichen Eigenschaften grundsätzlich von Haftklebstoffen. Haftklebstoffe sind im allgemeinen Systeme mit insgesamt hoher Oberflächenklebrigkeit und sind ungefüllte Systeme, d. h. sie enthalten keine Füllstoffe. Sie werden im Gegensatz zu Dichtstoffen und Einseitklebern als dünnflächige Schichten (Schichtdicken von ca. 20 bis 200 μm) aufgetragen und erfordern daher schon eine sehr unterschiedliche Polymermechanik. Für Einseitklebstoffe ist ein nur einseitiger Auftrag der Masse gefordert, ferner eine Korrigierbarkeit der verlegten Fliesen oder Bodenbeläge während der Verarbeitung, eine Entfernbarkeit frischer Massenreste von den Fliesen oder Bodenbelägen und von den Arbeitsgeräten mit Wasser sowie eine ausgezeichnete Alterungsbeständigkeit. Diese besonderen Anforderungen führten auch zu besonderen Prüfnormen wie der Prüfung der Schäl- und Scherfestigkeit, der Prüfung des Naßanzugs- und des Trockenanfaßvermögens.

Die bisher als Dichtstoffe oder zum festen Verlegen von Fliesen oder Bodenbelägen im Handel erhältlichen wässrigen Dispersionen auf der Basis von Acrylestercopolymerisaten enthalten neben mindestens 20 Gewichtsprozent Füllstoff größere Mengen an organischen Lösungsmitteln und/oder Weichmachern, die beim Abbinden des Systems zum Teil in die Atmosphäre gelangen, oder sie enthalten einen grösseren Anteil an niedermolekularen Harzen wie Balsam- bzw. Kolophoniumharze. Der Gehalt an diesen Harzen ist aber problematisch, da sie als niedermolekulare Verbindungen migrieren können, ausgewaschen werden können, Farbveränderungen z. B. durch Oxydation oder Verunreinigungen in der Mischung verursachen, die Polymerfestigkeit herabsetzen oder auch toxikologisch bedenklich sein können.

Der vorliegenden Erfindung liegt die Aufgabe zugrunde, verbesserte Massen auf der Basis von mindestens 20 Gew.-% Füllstoff enthaltenden wässrigen Dispersionen von Acrylestercopolymeren für die Herstellung von Abdichtungen, Beschichtungen einschließlich von Imprägnierungen sowie zum Verkleben von Fliesen oder Fußbodenbelägen zu finden, die möglichst keine flüchtigen organischen Lösungsmittel, Weichmacher und niedermolekulare Harze wie Naturharze oder modifizierte Naturharze enthalten und die vorgenannten Nachteile der derzeit für die Verfahren verwendeten wässrigen Acrylestercopolymerisatdispersionen nicht oder nur in deutlich geringerem Umfang aufweisen.

Es wurde nun gefunden, daß die Aufgabe durch Auftragen von Massen auf der Basis von mindestens 20 Gew.-% Füllstoffen enthaltenden wässrigen Dispersionen von Acrylestercopolymeren als Dichtstoffe, Beschichtungsmittel (einschließlich Imprägniermittel) oder Einseitklebstoffe gelöst werden kann, wenn man eine füllstoffhaltige wässrige Dispersion einer Polymermischung aus a) einem Polymer A mit einem K-Wert von 5 bis 55 und einer Glasübergangstemperatur von unter -10 °C, das zumindestens 50 Gew.-% einen Acrylsäureester einpolymerisiert enthält, und b) einem Polymer B, das ein (Meth)Acrylestercopolymerisat mit einer Glasübergangstemperatur von -50 bis +50 °C und einem $M_n$ von über 20 000 ist, verwendet.

Gegenstand der Erfindung ist somit ein Verfahren zur Herstellung von Abdichtungen und Beschichtungen sowie zum Verkleben von Fliesen oder Fußbodenbelägen durch Auftragen einer mindestens 20 Gew.-% Füllstoff enthaltenden Dispersion von Acrylestercopolymerisaten, die weniger als 3 Gew.-% an organischen Lösungsmitteln, Weichmachern und niedermolekularen, ggf. modifizierten Naturharzen enthalten, wobei man eine mindestens 20 Gew.-% Füllstoff enthaltende wässrige Dispersion einer Polymermischung aus

a) einem Polymer A mit einem K-Wert von 5 bis 55 und mit einer Glasübergangstemperatur unter -10 °C, das zu mindestens 50 Gew.-% mindestens einen Ester der Acrylsäure einpolymerisiert enthält, und

b) einem Polymer B mit einem Molekulargewicht Mn von über 20 000, das ein (Meth)Acrylestercopolymerisat mit einer Glasübergangstemperatur von -50 bis +50 °C ist,

aufträgt.

Die Verwendung von füllstoffhaltigen wässrigen Acrylestercopolymeren als lösungsmittelfreie Einseitkleber für Bodenbeläge ist aus der EP-A 490 191 bekannt. Die dort beschriebenen Massen sind zwar lösungsmittelfrei, enthalten jedoch zwingend einen Weichmacher und ein Harz. Füllstoffhaltige wässrige Acrylestercopolymere für Fußbodenbeläge, die im wesentlichen frei von organischen Lösungsmitteln, Weichmachern und Harzen sind, sind in der WO-A-9521884 beschrieben. Die dort beschriebenen Dispersionen von Acrylesterpolymeren mit Glasübergangstemperaturen von unter -25 °C entsprechen den bevorzugten Polymeren B gemäß der vorliegenden Erfindung. Die WO-A-9521884 beschreibt nicht eine erfindungsgemäße Mischung der Polymeren B mit den Polymeren A. Im Vergleich zu den in der WO-A-9521884 beschriebenen Dispersionen von Polymeren B zeigen die Dispersionen der erfindungsgemässen Mischungen der Polymeren B mit den Polymeren A bei der Verwendung als Einseitklebstoffe für Fußbodenbeläge verbesserte Eigenschaften bei der Verarbeitung hinsichtlich der besseren Fixierung im nassen und trockenen Zustand sowie der Geruchsfreiheit. Ferner haben sie überraschende Vorteile bzgl. des Haftvermögens zu Gummi und der besonders hohen Wärmestandfestigkeit.

Die erfindungsgemäß verwendeten Dispersionen enthalten weniger als 3 Gew.-%, insbesondere weniger als 1 Gew.-%, der erwähnten Lösungsmittel, Weichmacher und Naturharze. Besonders bevorzugt sind sie völlig frei davon.

Die erfindungsgemäß für die Mischung mit den Polymeren B verwendeten Polymeren A haben einen K-Wert von 5 bis 55, bevorzugt von 5 bis 30, eine Glasübergangstemperatur von unter -10 °C und bevorzugt von -20 bis -60 °C und enthalten mindestens 50 Gew.-% mindestens eines Esters der Acrylsäure einpolymerisiert. Die Polymeren A haben eine Uneinheitlichkeit Mw/Mn von 1 bis 10 und bevorzugt von 1 bis 5, die ein Maß für die Breite der Molekulargewichtsverteilung des jeweiligen Polymeren darstellt.

Die K-Werte der erfindungsgemäß verwendeten Polymeren sind dabei bestimmt nach DIN 53726 in 1 Gew.-% iger Lösung in Tetrahydrofuran bei 25 °C. Die Glasübergangstemperatur Tg wird bestimmt mit Hilfe der DSC-Methode (Differential Scanning Calorimetry) nach ASTM 3418/82. Sie ist für Copolymere näherungsweise aus den Glasübergangstemperaturen der Homopolymerisate der entsprechenden Monomeren errechenbar nach der Gleichung von Fox (T.G. Fox, Bull. Am. Phys. Soc. (Ser.II)1, 123(1956)

$$\frac{1}{Tg} = \frac{X^1}{Tg^1} + \frac{X^2}{Tg^2} + .... + \frac{X^s}{Tg^s} \, ,$$

wobei $X^1$, $X^2$, ...$X^s$ die Massenbrüche der Monomeren 1 bis s und $Tg^1$, $Tg^2$, ...$Tg^s$ die Glasübergangstemperaturen der Homopolymeren der jeweiligen Monomeren 1 bis s in Grad Kelvin bedeuten. Die Glasübergangstemperaturen der Homopolymerisate der üblichen Monomeren sind bekannt und können der Fachliteratur, z. B. J.Brandrup, E.H.Immergut, Polymerhandbook, 2nd Ed., J.Wiley, New York 1975, entnommen werden.

Die Bestimmung der Uneinheitlichkeit Mw/Mn erfolgt mit den üblichen Methoden der Gelpermeationschromotographie, wobei die Molmasseneichung mit Polystyrol durchgeführt wird.

Das Polymer A ist meist ein Liquidpolymer, das auch in Form einer feinteiligen wässrigen Sekundärdispersion vorliegen kann. Sehr geeignete Polymere A enthalten einpolymerisiert

    a) 70 bis 99 Gew.-% Acrylester, die Homopolymerisate mit Glasübergangstemperaturen von -30 bis -60 °C und bevorzugt -40 bis -60 °C bilden,

    b) 1 bis 30 Gew.-% Carboxy- und ggf. Hydroxylgruppen enthaltende olefinisch ungesättigte copolymerisierbare Monomere, und

    c) 0 bis 29 Gew.-% weitere olefinisch ungesättigte copolymerisierbare Monomere.

Sehr vorteilhaft sind auch Polymere A, die

    a) 85 bis 98 Gew.-% Acrylester, die Homopolymerisate mit einer Glasübergangstemperatur von -40 bis -60 °C bilden, und

    b) 2 bis 15 Gew.-% Carboxy- und ggf. Hydroxylgruppen enthaltende Monomere einpolymerisiert enthalten.

Geeignete Monomere a) sind z. B. n-Butylacrylat, n-Hexylacrylat, 2-Ethylhexylacrylat, Decylacrylat oder Dodecylacrylat. Geeignete Monomere b) sind z. B. monoolefinisch ungesättigte copolymerisierbare Carbonsäuren mit 3 bis 5 C-Atomen, deren Anhydride und Halbester, wie Acrylsäure, Methacrylsäure, Maleinsäure, Fumarsäure, Itaconsäure, Maleinsäureanhydrid oder Maleinsäure-n-butylhalbester. Als geeignete Monomere b) mit Hydroxylgruppen seien z. B. genannt 2-Hydroxyethylacrylat und -methacrylat, Hydroxypropylacrylat und -methacrylat sowie 4-Hydroxybutylacrylat und -methacrylat. Als geeignete Monomere c) seien genannt Vinylester von Monocarbonsäuren mit 2 bis 18 C-Atomen wie Vinylacetat oder Vinylpropionat, nicht unter a) fallende Acrylsäure- und Methacrylsäureester wie Methylmethacrylat oder Ethylacrylat, vinyl- bzw. alkenylaromatische Monomere mit 8 bis 18 C-Atomen wie Styrol, α-Methylstyrol oder Vinyltoluol, Amide olefinisch ungesättigter Carbonsäuren mit 3 bis 5 C-Atomen, wie Acrylamid oder Methacrylamid, N-Vinylmonomere wie N-Vinylpyrrolidon oder N-Vinylcaprolactam und Aminogruppen enthaltende olefinisch ungesättigte Monomere wie Dimethylaminoethylacrylat oder Dimethylaminobutylacrylat. Besonders vorteilhaft sind Acrylestercopolymerisate A, die carboxylgruppenhaltige Monomere wie Acrylsäure oder Methacrylsäure in Mengen von 1 bis 10 und bevorzugt von 1 bis 5 Gew.-% einpolymerisiert enthalten. Art und Mengen der Monomeren sind in Mischungen dabei so zu wählen, daß Polymere A resultieren, die die Maßgaben bezüglich Monomerenmengen und Glasübergangstemperaturen der Polymeren erfüllen. Es hat sich als zweckmässig erwiesen, das Polymere A mit solchen Eigenschaften herzustellen, daß es deutlich die Klebrigkeit der Mischung M nach deren Trocknung erhöht.

Die Herstellung der Polymeren A kann in an sich bekannter Weise erfolgen, wobei für die Herstellung von Polymeren A mit sehr enger Molekulargewichtsverteilung (Mw/Mn nahe 1) ein bekanntes Verfahren der Hochtemperaturpolymerisation anzuwenden ist. Bevorzugt erfolgt die Herstellung der Polymeren A durch Polymerisation in Substanz oder Lösung bei Temperaturen von 60 bis 220 °C, wobei für die Lösungspolymerisation übliche organische Lösungsmittel wie Kohlenwasserstoffe (z. B. Toluol), Alkohole (z. B. Isobutanol), Ester (z. B. Essigsäureethylester) oder Ketone (z. B. Methylethylketon) mit geeigneten Siedebereichen Verwendung finden können bzw. in geschlossenen Reaktoren unter Druck (bis 15 bar) bei flüchtigen Lösungsmitteln die höhere Polymerisationstemperatur eingestellt wird. Es können die üblichen Polymerisationsinitiatoren in bekannten Mengen angewandt werden. Im Hinblick auf die gewünschten niedrigen K-Werte bzw. Molekulargewichte der Polymeren A ist die Mitverwendung von Polymerisationsreglern bei der Polymerisation sinnvoll, wie von Mercaptanen, von denen als Beispiele Mercaptoethanol, Mercaptobernsteinsäure, 3-Mercaptopropyltrimethoxysilan und insbesondere Dodecylmercaptan genannt seien. Im Hinblick auf die Art der erfindungsgemäßen Verwendung der Polymeren A ist es sinnvoll, vor der Verwendung flüchtige Verunreinigungen der Polymeren A wie Restmonomere weitgehend zu entfernen.

Die Weiterverarbeitung der hergestellten Polymeren A zu den erfindungsgemäß verwendeten Mischungen mit den Polymeren B kann vorteilhaft erfolgen, indem das Liquidpolymer A direkt in eine Dispersion des Polymeren B unter Kontrolle und Nachregelung des pH-Wertes einemulgiert wird. Insbesondere bei Carboxylgruppen enthaltenden Polymeren A ist es oft auch vorteilhaft, das Polymere A unter alkalischen Bedingungen mit den üblichen Methoden der Polymeremulgierung zu einer Sekundärdispersion zu verarbeiten, die dann z. B. leicht mit der wässrigen Dispersion des Polymeren B verrührt werden kann. In der resultierenden Mischung M können die Polymeren A und B in sehr unterschiedlichen Verhältnissen zueinander vorliegen, doch ist meist zweckmässig, daß das Polymere A in kleinerer Menge als das Polymere B in der Mischung von A+B vorliegt. Vorteilhaft enthält die Mischung von A+B 1 bis 49 Teile Polymer A und 51 bis 99 Teile Polymer B, bevorzugt 25 bis 45 Gew.-% des Polymeren A und 55 bis 75 Gew.-% des Polymeren B, jeweils auf die 100%igen Polymeren bezogen.

Die Polymeren B stellen (Meth)Acrylestercopolymerisate mit einer Glasübergangstemperatur von -50 bis +50 °C, insbesondere von unter -25 °C und bevorzugt von unter -30 °C dar. Bevorzugt weisen sie Molekulargewichte Mn von über 20 000 auf. Sehr geeignete Polymere B enthalten mindestens 50 und insbesondere 60 bis 100 Gew.-% mindestens eines Esters der Acrylsäure und/oder der Methacrylsäure einpolymerisiert. Beispiele für geeignete Ester sind $C_1$-$C_{12}$-Alkylacrylate, wie Methyl-, Ethyl-, n-Propyl-, n-Butyl-, 2-Ethylhexyl-, Decyl- oder Dodecylacrylat sowie n-Butylmethacrylat, n-Hexylmethacrylat.

Bevorzugt sind solche Monomere, die Homopolymerisate mit Glasübergangstemperaturen von -40 °C bis -60 °C bilden. Bevorzugte Polymere B enthalten 0,5 bis 10 und insbesondere 0,5 bis 5 Gew.-% an einer copolymerisierbaren olefinisch ungesättigten Carbonsäure mit 3 bis 5 C-Atomen oder deren Anhydride oder Halbester einpolymerisiert, wie Acrylsäure, Methacrylsäure, Maleinsäure, Fumarsäure, Itaconsäure, Maleinsäureanhydrid oder Maleinsäure-n-butylhalbester. Als weitere Comonomere kommen für die Polymeren B vor allem die vorstehend für die Polymeren A für b) und c) genannten Comonomeren in Frage.

Beispiele sehr geeigneter Copolymerer B sind solche, die, neben ≥ 50 Gew.-% an Alkyl(meth)acrylaten, Methylmethacrylat, Vinylacetat, Vinylpropionat und/oder Styrol in einer Menge bis zu 30 Gew.-% sowie Carboxylgruppen und ggf. Hydroxylgruppen enthaltende Monomere in einer Menge von jeweils höchstens 5 Gew.-% enthalten, wobei die Copolymeren B Glasübergangstemperaturen von unter 25 °C aufweisen. Die Polymeren B können vorteilhaft durch Lösungspolymerisation hergestellt und anschließend in bekannter Weise in Polymerdispersionen überführt werden, bevorzugt erfolgt jedoch die Herstellung durch Emulsionspolymerisation, so daß direkt wässrige Polymerdispersionen gewonnen werden. Die Herstellung der Polymeren B ist in der WO-A-9521884 beschrieben, auf die diesbezüglich hiermit Bezug genommen wird. Der Feststoffgehalt der resultierenden Polymerdispersionen beträgt insbesondere 40 bis 75 Gew.-%.

Für die Verwendung der Mischung M aus den Polymeren A und B, die wie oben angegeben erfolgen kann, werden der Mischung die mineralischen Füllstoffe, wie feingemahlene oder gefällte Kreiden mit einem mittleren Teilchendurchmesser von im allgemeinen 2 bis 50 μm oder Quarzmehl mit einem mittleren Teilchendurchmesser von 3 bis 50 μm zugemischt, ferner Netz- oder Dispergiermittel, Verdicker und ggf. weitere Zusatzstoffe wie Entschäumer und Konservierungsstoffe. Der Wassergehalt der gebrauchsfertigen Massen liegt im allgemeinen bei 7 bis 50 Gew.-

%, insbesondere bei 10 bis 30 Gew.-%, bezogen auf die gesamte wässrige Zubereitung.

Die füllstoffhaltige wässrige Zubereitung mit der Mischung M aus den Polymeren A und B eignet sich als Einseitklebstoff für Fußbodenbeläge z. B. aus Polyvinylchlorid in Ausführungen als Mehrschichtbeläge oder Homogenbeläge, Schaumstoffbeläge mit Textilunterseite, z.B Jute, Polyestervlies, Gummibeläge, Textilbeläge mit unterschiedlicher Rückenausstattung, wie Polyurethanschaum, Styrol-Butadien-Copolymerschaum, textiler Zweitrücken, Nadelfilzbodenbeläge, Polyolefinbeläge oder Linoleumbeläge, auf Untergründen wie Holz, Estrich, Beton, keramischen Fliesen, Metalluntergründen oder anderen ähnlichen Untergründen.

Der Auftrag der wässrigen Zubereitung mit der erfindungsgemäß verwendeten Polymermischung kann z. B. mit einer Zahnleiste auf den Untergrund erfolgen. Nach dem üblichen Ablüften wird dann der Bodenbelag eingelegt. In der Verarbeitung ähneln die erfindungsgemässen Massen dabei den lösungsmittelhaltigen Einseitklebern. Die erfindungsgemäß verwendeten Massen weisen ein gutes Niveau von anwendungstechnischen Eigenschaften wie Schälfestigkeit, Scherfestigkeit, Naßanzugsvermögen und Trockenanfaßvermögen und eine hohe Wärmestandfestigkeit auf.

Die nachstehenden Beispiele und Vergleichsversuche erläutern weitergehend die erfindungsgemässen Verfahren ohne sie zu beschränken. Soweit nicht anders angegeben, beziehen sich Teile und Prozente auf das Gewicht. Die angegebenen K-Werte, Glasübergangstemperaturen und Mw/Mn-Verhältnisse wurden wie vorstehend im Text angegeben ermittelt bzw. errechnet.

Beispiel 1 - Verwendung für Fußbodenbeläge

Eine 55%ige wässrige Dispersion eines Copolymeren aus 40 % n-Butylacrylat, 30 % 2-Ethylhexylacrylat und 30 % Vinylacetat mit einer Glasübergangstemperatur von -25 °C (Polymeres B) wurde mit 40 % (bezogen auf das Polymer B der Dispersion) eines 100%igen Copolymerisats aus 90 Teilen n-Butylacrylat und 10 Teilen Acrylsäure mit einem K-Wert von 12,5 und einer Glasübergangstemperatur von -33 °C (Polymer A) abgemischt und der pH-Wert der erhaltenen Mischung mit Ammoniak auf 7,5 gestellt. Anschließend wurde unter Rühren feinteiliges Calciumcarbonat zu der Mischung gegeben, so daß das Gewichtsverhältnis Polymere (Polymer A + Polymer B) zu Füllstoff 45:55 betrug. Nach 24 Stunden Ablüften wurde ein PVC-Belag und ein Gummibelag (Norament) eingelegt. Der Auftrag des Einseitklebers betrug 300 g/m$^2$. Geprüft wurde die Schälfestigkeit, die Wärmestandfestigkeit, das Naßanzugsvermögen und das Trockenanfaßvermögen im Vergleich zu einem herkömmlichen harzhaltigen Einseitklebstoff (Vergleichsversuch 1). Die Ergebnisse der Prüfung sind in Tabelle 1 wiedergegeben.

Vergleichsversuch 1 - Verwendung für Fußbodenbeläge

Es wurde wie in Beispiel 1 verfahren, jedoch zum Vergleich ein herkömmlicher Einseitklebstoff für Bodenbeläge mit der folgenden Zusammensetzung verarbeitet und geprüft:

| | |
|---|---|
| 35,0 Teile | Acronal® V 302; pH-Wert 7,5, einem Polymeren auf Basis von Acrylestern mit Tg von -20 °C, |
| 0,5 Teile | Emulphor® OPS 25, einem Emulgator, |
| 0,2 Teile | Lumiten® EL, einem Entschäumer |
| 8,5 Teile | 2%ige Latekoll D-Lösung, einem Verdicker |
| 2,0 Teile | Plastilit® 3431, einem Weichmacher (Monophenylglykolether) |
| 20,0 Teile | Harzschmelze (80 Teile Kolophoniumharz und 20 Teile Plastilit 3431) |
| 33,8 Teile | Calcit (Calciumcarbonat) |

| | | | |
|---|---|---|---|
| Feststoffgehalt | 75,6 % | Harzgehalt | 16,0 % |
| Füllstoffgehalt | 33,8 % | Polymergehalt | 19,3 % |

Tabelle 1 -

| Prüfdaten bei Verwendung für Fußbodenbeläge | | | | |
|---|---|---|---|---|
| | Beispiel 1 | | Vergleichsversuch 1 | |
| Belag | PVC | Gummi | PVC | Gummi |
| Schälfestigkeit (N/cm) | | | | |
| Ablüftungszeit | | | | |
| 10 Minuten | 31 | 34 | 24 | 27 |
| 30 Minuten | 20 | 21 | 21 | 16 |
| Wärmestandfestigkeit (Minuten) | 150 Kohäsion | | 80 Kohäsion | |
| Naßanzugsvermögen (N/5 cm) | | | | |
| 15 Minuten | 6 Kohäsion | | 8 Kohäsion | |
| 30 Minuten | 33 Kohäsion | | 20 Kohäsion | |
| Trockenanfaßvermögen (N/5 cm) | | | | |
| 30 Minuten | 38 Kohäsion | | 29 Kohäsion | |

Prüfmethode Naßanzugsvermögen

Die Substrate (Glasal 2000 (Faserzementplatte)(500 x 200 x 8 mm) und Nadelvlies Freudenberg Studio (200 x 50 mm NBB-Streifen)) wurden ebenso wie der Einseitklebstoff 24 Stunden bei Normklima (23 °C, 50% rel. Feuchtigkeit) konditioniert. Der Einseitklebstoff wird mit einem 2 mm DIN-Schälrakel in Längsrichtung auf das Glasal 2000 aufgetragen und die Nadelvliesbeläge (NBB-Streifen) nach 10 Minuten Ablüften mit der Rückseite in das Kleberbett eingelegt und mit einer 2,5 kg Walze durch 3 maliges Hin- und Herrollen angepreßt. In den angegebenen Zeitabständen werden die Beläge mit einem Abzugsgerät abgeschält und dabei die Zunahme des Abschälwiderstandes in N/5 cm bestimmt. Die Prüfgeschwindigkeit beträgt 725 mm/Minute. Zur Auswertung wird der Mittelwert aus 2 Prüfkörpern in N/5 cm gebildet und das Bruchbild beurteilt.

Prüfmethode Trockenanfaßvermögen

Die Substrate (Glasal 2000 (500 x 200 x 8 mm) und Pegulan B1 Testbelag (200 x 50 mm)) sowie der Einseitklebstoff wird 24 Stunden bei Normklima (23 °C, 50 % rel. Feuchtigkeit) konditioniert. Der Einseitklebstoff wird mit einer 1 mm DIN-Scherrakel in Längsrichtung auf Glasal 2000 aufgetragen und nach 10 bis 45 minütigem Ablüften wird das PVC mit der Rückseite in das Einseitklebbett eingelegt und mit einer 2,5 kg Walze durch 3 maliges Hin- und Herrollen angepreßt. Die Prüfung erfolgt durch Abschälen mit dem Abzugsgerät, und es wird der Abschälwiderstand in N/5 cm bestimmt. Die Prüfgeschwindigkeit beträgt 725 mm/Minute. Auswertung: Mittelwert aus Prüfkörpern in N/5 cm, Bruchbildbeurteilung.

Prüfmethode Wärmestandfestigkeit

Die Substrate (Glasal 2000 (60 x 50 x 8 mm), Pegulan B1 Testbelag (60 x 50 mm)) sowie der Einseitklebstoff werden 24 Stunden bei Normklima (23 °C, 50% rel. Feuchtigkeit) konditioniert. Der Einseitklebstoff wird mit einem 1 mm DIN-Scherrakel in Querrichtung auf Glasal 2000 aufgetragen. Der PVC-Belag wird mit Hilfe einer Klebeschablone so verklebt, daß eine Verklebungsfläche von 20 x 50 mm entsteht. Der PVC-Testbelag wird nach 5 Minuten Ablüften eingelegt und mit einer Handpresse und einem Anpreßdruck von 0,3 N/mm$^2$ 10 Sekunden lang angepreßt. Nach einer Lagerung des Prüfkörpers für die Dauer von 14 Tagen bei Normklima erfolgt die Prüfung im Wärmeschrank bei 50 °C und einer Gewichtsbelastung von 2 kg (± 1). Vor Prüfbeginn werden die Prüfkörper 30 Minuten temperiert. Auswertung: Mittelwert aus 5 Prüfkörpern in Minuten, Bruchbildbeurteilung.

Prüfmethode Schälfestigkeit nach DIN 16860

Die Substrate (Glasal 2000 (150 x 50 x 8 mm), Pegulan B1 Testbelag (250 x 50 mm)) sowie der Einseitklebstoff werden 24 Stunden bei Normklima (23 °C, 50 % rel. Feuchtigkeit) konditioniert. Der Einseitklebstoff wird mit einer 2 mm DIN-Schälrakel in Querrichtung auf Glasal 2000 aufgetragen. Der PVC-Belag wird mit der Rückseite so auf das Glasal 2000 geklebt, daß 3 Seiten bündig sind und der Belag an einer Seite übersteht. Nach 10 und 60 Minuten Ablüften wird der Testbelag mit einer Handpresse und einem Anpreßdruck von 0,05 N/mm$^2$ 10 Sekunden lang angepreßt. Der Prüfkörper wird 14 Tage bei Normklima gelagert und danach die Schälung mit einer Prüfgeschwindigkeit von 100 mm/ Minute durchgeführt. Auswertung: Mittelwert aus 5 Prüfkörpern in N/cm; Bruchbildbeurteilung.

Beispiel 2 - Verwendung als Dichtstoff

300 Teile einer 65%igen wässrigen Dispersion eines Copolymeren aus 87 % n-Butylacrylat und 13 % Methylmethacrylat mit einer Glasübergangstemperatur von -40 °C (Polymer B) werden mit 20 %iger Natronlauge auf einen pH-Wert von 8,2 gestellt und diese mit 100 Teilen eines 100%igen Copolymerisats aus 95,05 % n-Butylacrylat und 4,95 Acrylsäure mit einem K-Wert von 11,5, einer Glasübergangstemperatur von -41 °C und einem Mw/Mn-Verhältnis von 2,1 (Polymer A) mit der Dilexerscheibe 30 Minuten bei 6000 Upm verrührt. Anschließend wurde die Mischung erneut mit Natronlauge auf pH 8 gestellt. Über Nacht fiel der pH-Wert von 8,2 auf 7,5 ab. Die Mischung wurde erneut mit Natronlauge auf einen pH-Wert von 8,2 gestellt. Sie ließ sich glatt verstreichen. Unter Rühren mit einem Planetmischer wurden 15 Teile Titandioxid, 3 Teile sulfiertes Octylphenolethoxilat mit 25 Mol Ethylenoxid, 2 Teile Natriumsalz der Polyacrylsäure als Pigmentverteiler und 580 Teile Calciumcarbonat eingearbeitet. Die Prüfdaten des so hergestellten Dichtstoffes sind in Tabelle 2 wiedergegeben.

Vergleichsversuch 2

Es wurde wie in Beispiel 2 verfahren, jedoch anstelle von 100 Teilen des Polymer A 100 Teile Phthalsäure-di-2-ethylhexylester als Weichmacher eingemischt. Die Prüfdaten der resultierenden Masse zeigt Tabelle 2.

Tabelle 2

| Prüfdaten des Dichtstoffes | | |
|---|---|---|
| | Beispiel 2 | Vergleichsversuch 2 |
| Standvermögen DIN 52454 | gut | gut |
| Volumenverlust in % nach DIN 52451 | 18 | 18 |
| Dehnung in % nach DIN 53504 | 445 | 385 |
| Zugspannung in N/mm$^2$ (Normstab S2) | | |
| 100% | 0,29 | 0,45 |
| 200% | 0,35 | 0,59 |
| 300% | 0,35 | 0,59 |
| Rückstellvermögen in % nach DIN 52458 | 52 | 58 |
| Lagerstabilität 4 Wochen bei 50 °C | gut | gut |
| Restklebrigkeit nach 4 Wochen | klebfrei | leicht klebrig |
| Haftung auf Holz | gut | gut |
| Haftung auf Gehwegplatte | sehr gut | gut |

**Patentansprüche**

1. Verfahren zur Herstellung von Abdichtungen und Beschichtungen sowie zum Verkleben von Fliesen oder Fußbodenbelägen unter Auftragen einer mindestens 20 Gew.-% Füllstoff enthaltenden wässrigen Dispersion von Acrylestercopolymerisaten, die weniger als 3 Gew.-% an organischen Lösungsmitteln, Weichmachern und niedermolekularen, ggf. modifizierten Naturharzen enthalten, wobei man eine mindestens 20 Gew.-% Füllstoff enthaltende wässrige Dispersion einer Polymermischung M aus

a) einem Polymeren A mit einem K-Wert von 5 bis 55 nach DIN 53726 in 1 Gew.-% iger Lösung in THF bei 25°C und mit einer Glasübergangstemperatur unter -10 °C nach ASTM 3418/82, das zu mindestens 50 Gew.-% mindestens einen Ester der Acrylsäure einpolymerisiert enthält, und

b) einem Polymeren B mit einem Molekulargewicht $M_n$ von über 20 000, das ein (Meth)Acrylestercopolymerisat mit einer Glasübergangstemperatur von -50 bis +50 °C ist, aufträgt.

2.  Verfahren nach Anspruch 1, **dadurch gekennzeichnet, daß** das Polymer A ein Liquidpolymer ist, das auch in Form einer feinteiligen wässrigen Sekundärdispersion vorliegen kann.

3.  Verfahren nach Anspruch 1 oder 2, **dadurch gekennzeichnet, daß** das Polymer A eine Glasübergangstemperatur von -20 bis -60 °C aufweist.

4.  Verfahren nach einem der Ansprüche 1 bis 3, **dadurch gekennzeichnet, daß** das Polymer A einen K-Wert von 5 bis 30 aufweist.

5.  Verfahren nach einem der Ansprüche 1 bis 4, **dadurch gekennzeichnet, daß** das Polymer A

a) 70 - 99 Gew.-% Acrylester, die Homopolymerisate mit Glasübergangstemperaturen von -30 bis -60 °C bilden,

b) 1 - 30 Gew.-% Carboxy- und/oder Hydroxylgruppen enthaltende Monomere, und

c) 0 - 29 Gew.-% weitere olefinisch ungesättigte Monomere einpolymerisiert enthält und einen K-Wert von 5 - 55 aufweist.

6.  Verfahren nach einem der Ansprüche 1 bis 5, **dadurch gekennzeichnet, daß** das Polymer A einpolymerisiert enthält:

a) 85 - 98 Gew.-% Acrylester, die Homopolymerisate mit einer Glastemperatur von -40 bis -60 °C bilden, und

b) 2 - 15 Gew.-% Carboxy- und ggf. Hydroxylgruppen enthaltende Monomere.

7.  Verfahren nach einem der Ansprüche 1 bis 6, **dadurch gekennzeichnet, daß** das Polymer A eine Uneinheitlichkeit $M_w / M_n$ von 1 bis 5 aufweist.

8.  Verfahren nach einem der Ansprüche 1 bis 7, **dadurch gekennzeichnet, daß** das Polymer B mindestens 50 Gew.-% Acrylester und/oder Methacrylester einpolymerisiert enthält.

9.  Verfahren nach einem der Ansprüche 1 bis 8, **dadurch gekennzeichnet, daß** die Mischung M hergestellt wird durch Emulgierung des Polymers A unter alkalischen Bedingungen und anschließendes Vermischen mit einer wässrigen Dispersion des Polymers B.

10. Verwendung einer mindestens 20 Gew.-% Füllstoff enthaltenden wässrigen Dispersion einer Polymermischung aus

a) einem dispergierten Polymeren B mit einem Molekulargewicht $M_n$ von über 20 000, das ein (Meth)Acrylestercopolymerisat mit einer Glasübergangstemperatur von -50 bis +50 °C ist, und

b) einem Polymeren A mit einem K-Wert von 5 bis 55 und einer Glasübergangstemperatur unter -10 °C, das zu mindestens 50 Gew.-% einen Ester der Acrylsäure einpolymerisiert enthält,

als Dichtstoff, Beschichtungsmittel oder Einseitklebstoff.

11. Wässrige, mindestens 20 Gew.-% Füllstoff enthaltende Dispersion einer Polymermischung aus

a) einem dispergierten Polymeren B mit einem Molekulargewicht $M_n$ von über 20 000, das ein (Meth)Acrylestercopolymerisat mit einer Glasübergangstemperatur von -50 bis +50 °C ist, und

b) einem Polymeren A mit einem K-Wert von 5 bis 55 und einer Glasübergangstemperatur unter -10 °C, das zu mindestens 50 Gew.-% einen Ester der Acrylsäure einpolymerisiert enthält.

**Claims**

1. A method of producing seals and coatings and of bonding tiles or floor coverings entailing application of an aqueous acrylate copolymer dispersion which has a filler content of at least 20 % by weight and which comprises less than 3 % by weight of organic solvents, plasticizers and modified or unmodified natural resins of low molecular mass, wherein an aqueous dispersion is applied containing at least 20 % by weight of filler, of a polymer mixture M comprising

   a) a polymer A having a K value of from 5 to 55 in accordance with DIN 53726 in 1 % strength by weight solution in THF at 25 °C and a glass transition temperature of below -10 °C in accordance with ASTM 3418/82, at least 50 % by weight of which comprises copolymerized units of at least one ester of acrylic acid, and

   b) a polymer B having a molecular weight Mn of more than 20,000 which is a (meth)acrylate copolymer having a glass transition temperature of from -50 to +50 °C.

2. A process as claimed in claim 1, wherein the polymer A is a liquid polymer which may also be in the form of a fine aqueous secondary dispersion.

3. A process as claimed in claim 1 or 2 wherein the polymer A has a glass transition temperature of from -20 to -60 °C.

4. The process as claimed in any of claims 1 to 3 wherein the polymer A has a K value of from 5 to 30.

5. A process as claimed in any of claims 1 to 4, wherein the polymer A comprises

   a) from 70 - 99 % by weight of acrylates which form homopolymers having glass transition temperatures of from -30 to -60 °C,

   b) from 1 - 30 % by weight of carboxyl- and/or hydroxyl-containing monomers, and

   c) from 0 - 29 % by weight of other olefinically unsaturated monomers, in copolymerized form, and has a K value of from 5 - 55.

6. A process as claimed in any of claims 1 to 5, wherein the polymer A comprises, in copolymerized form:

   a) from 85 - 98 % by weight of acrylates which form homopolymers having a glass transition temperature of from -40 to -60 °C, and

   b) from 2 - 15 % by weight of carboxyl- and possibly hydroxyl-containing monomers.

7. A process as claimed in any of claims 1 to 6, wherein the polymer A has a polydispersity $M_w/M_n$ of from 1 to 5.

8. A process as claimed in any of claims 1 to 7, wherein the polymer B contains in copolymerized form at least 50 % by weight of acrylates and/or methacrylates.

9. A process as claimed in any of claims 1 to 8, wherein the mixture M is prepared by emulsifying the polymer A under alkaline conditions and then mixing with an aqueous dispersion of the polymer B.

10. The use of an aqueous dispersion, containing at least 20 % by weight of filler, of a polymer mixture comprising

    a) a disperse polymer B having a molecular weight Mn of more than 20,000 which is a (meth)acrylate copolymer having a glass transition temperature of from -50 to +50°C, and

    b) a polymer A having a K value of from 5 to 55 and a glass transition temperature of below -10 °C, at least 50 % by weight of which contains copolymerized units of an ester of acrylic acid,

as a sealant, coating material or single-side adhesive (adhesive for one-sided application).

11. An aqueous dispersion, containing at least 20 % by weight of filler, of a polymer mixture comprising

   a) a disperse polymer B having a molecular weight Mn of more than 20,000 which is a (meth)acrylate copolymer having a glass transition temperature of from -50 to +50°C, and

   b) a polymer A having a K value of from 5 to 55 and a glass transition temperature of below -10 °C, at least 50 % by weight of which contains copolymerized units of an ester of acrylic acid.

**Revendications**

1. Procédé de préparation d'étanchéités et de revêtements, et de collage de carreaux ou de revêtements de sol, par application d'une dispersion aqueuse, contenant au moins 20 % en poids de charges, de copolymères d'acrylates, contenant moins de 3 % en poids de solvants organiques, de plastifiants et de résines naturelles à faible masse moléculaire, éventuellement modifiées, où on applique une dispersion aqueuse, contenant au moins 20 % en poids de charges, d'un mélange de polymères M constitué

   a) d'un polymère A ayant une valeur K de 5 à 55 d'après DIN 53726 en solution à 1 % en poids dans le THF à 25°C, et ayant une température de transition vitreuse inférieure à -10°C d'après ASTM 3418/82, qui contient, polymérisés, au moins 50 % en poids d'au moins un ester de l'acide acrylique, et
   b) d'un polymère B ayant une masse moléculaire $M_n$ supérieure à 20 000, qui est un copolymère d'un (méth)acrylate ayant une température de transition vitreuse de -50 à +50°C.

2. Procédé selon la revendication 1, **caractérisé en ce que** le polymère A est un polymère liquide, qui peut aussi se présenter sous forme d'une dispersion secondaire aqueuse finement divisée.

3. Procédé selon la revendication 1 ou 2, **caractérisé en ce que** le polymère A a une température de transition vitreuse de -20 à -60°C.

4. Procédé selon l'une des revendications 1 à 3, **caractérisé en ce que** le polymère A a une valeur K de 5 à 30.

5. Procédé selon l'une des revendications 1 à 4, **caractérisé en ce que** le polymère A contient, polymérisés

   a) de 70 à 99 % en poids d'acrylates qui forment des homopolymères ayant une température de transition vitreuse de -30 à -60°C,
   b) de 1 à 30 % en poids de monomères carboxylés et/ou hydroxylés, et
   c) de 0 à 29 % en poids d'autres monomères à insaturation oléfinique,

    et a une valeur K de 5 à 55.

6. Procédé selon l'une des revendications 1 à 5, **caractérisé en ce que** le polymère A contient, polymérisés:

   a) de 85 à 98 % en poids d'acrylates qui forment des homopolymères ayant une température de transition vitreuse de -40 à -60°C, et
   b) de 2 à 15 % en poids de monomères carboxylés et éventuellement hydroxylés.

7. Procédé selon l'une des revendications 1 à 6, **caractérisé en ce que** le polymère A a une polydispersité $M_w/M_n$ de 1 à 5.

8. Procédé selon l'une des revendications 1 à 7, **caractérisé en ce que** le polymère B contient, polymérisés, au moins 50 % en poids d'acrylates et/ou de méthacrylates.

9. Procédé selon l'une des revendications 1 à 8, **caractérisé en ce que** le mélange M est préparé par émulsification du polymère A dans des conditions alcalines, puis mélange à une dispersion aqueuse du polymère B.

10. Utilisation d'une dispersion aqueuse contenant au moins 20 % de charges d'un mélange de polymères constitué

a) d'un polymère dispersé B ayant une masse moléculaire $M_n$ supérieure à 20 000, qui est un copolymère de (méth)acrylates ayant une température de transition vitreuse de -50 à +50°C, et
b) d'un polymère A ayant une valeur K de 5 à 55 et une température de transition vitreuse inférieure à -10°C, qui contient, polymérisés, au moins 50 % en poids d'un ester de l'acide acrylique,

en tant que matériau d'étanchéité, produit de revêtement ou adhésif simple face.

11. Dispersion aqueuse, contenant au moins 20 % en poids de charges, d'un mélange de polymères constitué

a) d'un polymère dispersé B ayant une masse moléculaire $M_n$ supérieure à 20 000, qui est un copolymère de (méth)acrylates ayant une température de transition vitreuse de -50 à +50°C, et
b) d'un polymère A ayant une valeur K de 5 à 55 et une température de transition vitreuse inférieure à -10°C, qui contient, polymérisés, au moins 50 % en poids d'un ester de l'acide acrylique.